# EUROPÄISCHE PATENTSCHRIFT

(11) **EP 3 650 503 B1**
(45) Veröffentlichungstag und Bekanntmachung des Hinweises auf die Patenterteilung: **22.06.2022**
(21) Anmeldenummer: 18204639.1
(22) Anmeldetag: 06.11.2018
(51) Int. Cl.: C09C 1/42, C09D 7/61, C08K 3/34, C08K 11/00

(54) **FARBZUSAMMENSETZUNG UND FÜLLSTOFF FÜR EINE SOLCHE FARBZUSAMMENSETZUNG**
COLOUR COMPOSITION AND A FILLER FOR SUCH A COLOUR COMPOSITION
COMPOSITION COLORÉE ET CHARGE POUR UNE TELLE COMPOSITION COLORÉE

(43) Veröffentlichungstag der Anmeldung: 13.05.2020
(73) Patentinhaber: Gebrüder Dorfner GmbH & Co. Kaolin- und Kristallquarzsand-Werke KG, 92242 Hirschau (DE)
(72) Erfinder: Freund, Klaus-Jürgen, 53804 Much (DE); Kaltenecker, Oliver, 92551 Stulln (DE); Kräuter, Reinhard, 92237 Sulzbach-Rosenberg (DE)
(74) Vertreter: Hannke, Christian

(56) Entgegenhaltungen:
- WO-A1-00/31190
- US-A1- 2002 115 556
- US-A1- 2012 227 629
- US-A1- 2013 045 384
- US-A1- 2014 371 053
- US-A1- 2019 010 333

## Beschreibung

Die Erfindung betrifft einen Füllstoff für eine Farbzusammensetzung sowie eine einen solchen Füllstoff enthaltende Farbzusammensetzung. Weiterhin betrifft die Erfindung eine Verwendung eines solchen Füllstoffs zur Herstellung einer Farbzusammensetzung.

Aus dem Stand der Technik sind unterschiedliche Farbzusammensetzungen bekannt. Diese umfassen in der Regel Lösungs- und Bindemittel, Füllstoffe, Pigmente und verschiedene Additive. Die Pigmente sind dabei ausschlaggebend für den Farbeindruck der jeweiligen Zusammensetzung, wobei zwischen anorganischen und organischen Pigmenten unterschieden wird. Anorganische Weißpigmente aus Titandioxid sind aufgrund ihrer hohen Streukraft und guten Deckfähigkeit weitverbreitet, haben jedoch den Nachteil sehr teuer zu sein. Zum einen um die Kosten zu senken und zum anderen gewünschte optische und mechanische Eigenschaften der Farbzusammensetzung zu erreichen, werden dieser Füllstoffe zugesetzt. Gängige Füllstoffe umfassen Magnesiumsilikat, Calciumcarbonat, Aluminiumhydroxid, Aluminiumsilikat, Siliciumdioxid und Kieselgur.

Unter den Aluminiumsilikat-Füllstoffen hat sich vor allem Kaolin wegen seiner mattierenden Eigenschaften für Innen- und Fassadenfarben hervorgetan, dessen Hauptbestandteil Kaolinit ist. Durch Kalzinierung bei erhöhter Temperatur erfolgt zunächst eine Dehydratisierung bei Temperaturen zwischen 500 und 600 °C und die Bildung von sogenanntem amorphen Metakaolin, welches wiederum bei Temperaturen zwischen 900 und 950 °C eine Phasenumwandlung zu einem Aluminium-Silicium-Spinell eingeht. Eine Kalzinierung bei über 1050 °C resultiert in der Umwandlung der Spinellphase durch Siliciumdioxid-Abspaltung zu Mullit.

Beispielsweise zeigt EP 2 744 863 B1, dass ein hoher Mullit-Anteil in kalzinierten Kaolinpartikeln zu einer Erhöhung der Härte nach Mohs der Partikel führt. In Kombination mit einer sehr eng bemessenen Partikelgröße von lediglich d₅₀ = 2 - 7 µm konnte mit diesen Partikeln bei deren Verwendung als Füllstoff die Scheuer- und Polierbeständigkeit sowie die Deckkraft der Farbzusammensetzung verbessert werden.

Des Weiteren beschreiben US 2013/045384 A1, US 2002/115556 A1, US 2014/371053 A1, WO 00/31190 A1, US 2012/227629 A1 und US 2019/010333 A1 ebenfalls Partikel unter anderem zur Verwendung als Füllstoff.

Der vorliegenden Erfindung liegt die Aufgabe zugrunde, einen Füllstoff für eine Farbzusammensetzung zur Verfügung zu stellen, welcher hinsichtlich des nutzbaren Partikelgrößenbereichs nicht den aus dem Stand der Technik bekannten Limitierungen unterliegt und dennoch erhöhte Scheuer- und Polierbeständigkeit sowie Deckkraft der Farbzusammensetzung bewirken kann. Des Weiteren ist die Erfindung auf eine Farbzusammensetzung umfassend einen solchen Füllstoff und eine Verwendung eines derartigen Füllstoffs gerichtet.

Gelöst wird diese Aufgabe durch einen Füllstoff für eine Farbzusammensetzung gemäß Anspruch 1, eine Farbzusammensetzung gemäß Anspruch 5 sowie eine Verwendung gemäß Anspruch 13.

Ein wesentlicher Aspekt der Erfindung ist ein Füllstoff für eine Farbzusammensetzung, wobei der Füllstoff ein Kalzinat umfasst, welches Partikel mit einer mittleren Teilchengröße (dso, SediGraph III) im Bereich zwischen 3 µm und 50 µm und einem Mullitgehalt von 30 - 70 gemessen als Mullitindex aufweist, dadurch gekennzeichnet, dass die Schüttdichte des Füllstoffs > 600 g/ L beträgt.

Der Begriff "Füllstoff" bezeichnet im Folgenden einen universell einmischbaren Stoff, der bevorzugt im festen Aggregatszustand vorliegt. Bevorzugt handelt es sich bei dem Füllstoff um ein Pulver oder auch um einen rieselfähigen Stoff, ähnlich einem Sand. Der Füllstoff enthält die Partikel.

Der Begriff "Kalzinat" soll im Folgenden in einer besonders bevorzugten Ausführungsform als "kalzinierter Kaolin" verstanden werden.

Das als Füllstoff eingesetzte Kalzinat zeichnet sich durch einen hohen Mullitgehalt von 30 - 70 aus, welcher als Mullitindex (M.I.) gemessen wird. Die Bestimmung des M.I. eines zu untersuchenden Materials erfolgt mittels quantitativer Röntgendiffraktometrie (XRD). Dabei werden Peak-Intensitäten bestimmter Peaks aus dem Beugungsbild, die dem Mullit zugeordnet werden, mit den Peak-Intensitäten der entsprechenden Peaks im Röntgendiffraktogramm von Proben mit einem bekannten Mullitgehalt verglichen. Ein Mullitindex von 30 - 70 entspricht dabei etwa einem Mullitgehalt von 30 - 70%, wobei der M.I. nicht den exakten Gehalt in Prozent wiedergibt, da eine diesbezüglich notwendige Absorptionskorrektur und/oder Zwillingsanalyse üblicherweise nicht durchgeführt wird.

Der hohe Mullitgehalt von 30 - 70, gemessen als Mullitindex, der Kalzinat-Partikel führt zu einer deutlich höheren Härte nach Mohs der Partikel in einem Bereich zwischen 5,5 und 6,5 im Vergleich zu einer Härte nach Mohs von 3,5 - 5 für aus dem Stand der Technik bekannte Kalzinat-Partikel mit einem geringeren Mullitgehalt. Die höhere Härte nach Mohs der Partikel des Füllstoffs kann zu einer verbesserten Abriebbeständigkeit der daraus hergestellten Farbzusammensetzung führen, wie dies in EP 2 744 863 B1 gezeigt ist.

Weiterhin zeichnen sich die Partikel des Kalzinats durch eine mittlere Teilchengröße (dso, SediGraph III) in dem weiten Bereich zwischen 3 µm und 50 µm aus. Im Gegensatz zum Stand der Technik, der einen wesentlich kleineren Bereich für die mittlere Teilchengröße vorsieht, sind somit keine aufwendigen Herstellungs- bzw. Trennverfahren nötig. Dies ermöglicht eine kostengünstigere und zeitsparendere Produktion des Füllstoffs.

Als wesentlich für die vorliegende Erfindung konnte neben dem oben genannten breiten mittleren Teilchengrößenbereich zwischen 3 µm und 50 µm auch die hohe Schüttdichte > 450 g/ L identifiziert werden. Die erhöhte Schüttdichte ermöglicht nicht nur in einer Schüttung der Partikel, sondern beispielsweise auch in einer Farbzusammensetzung einen größeren Anteil an Partikeln pro Volumeneinheit. Aufgrund der bevorzugten vergleichsweise hohen Härte der Partikel kann so eine verbesserte Scheuerbeständigkeit erreicht werden.

Die höhere Schüttdichte kann durch verschiedene, sich gegebenenfalls auch ergänzende Maßnahmen erreicht werden. Beispielsweise könnte die gegenüber den aus dem Stand der Technik bekannten Partikeln die Schüttdichte aus der größeren Varianz der Teilchengröße resultieren, wobei kleinere Partikel Hohlräume ausfüllen können, die durch größere Partikel gebildet werden. Dadurch wäre eine insgesamt dichtere Packung und damit höhere Schüttdichte erreichbar.

Alternativ oder ergänzend dazu könnte die höhere Schüttdichte auch durch eine geeignete Einstellung der Geometrie der Partikel möglich sein. Insbesondere wäre diesbezüglich denkbar, Partikel mit gegenüber dem Stand der Technik größeren ebenen Oberflächenbereichen vorzusehen. Beispielsweise ist gemäß der EP 2 744 863 B1 eine Kalzinierung im Wirbelschichtverfahren vorgesehen, was üblicherweise zu einer im Wesentlichen tröpfchenförmigen Gestalt der Primärpartikel und somit auch zu einer unebenen (beispielsweise hügeligen) Oberfläche von daraus gebildeten Agglomeraten führt. Aufgrund dieser Oberflächengestalt ist das direkte flächige Kontaktieren benachbarter Partikel oder Agglomerate nicht möglich. Vielmehr berühren sich benachbarte Partikel ausschließlich im Bereich der Erhebungen (Hügelspitzen) unter Ausbildung von nicht von Partikeln sondern z.B. von Luft oder in einer Farbzusammensetzung durch Lösungsmittel oder Bindemittel besetzten Zwischenräumen.

In Schüttungen erfindungsgemäßer Füllstoffe oder des Kalzinats mit den definierten Partikeln können die Partikel in einem geringeren Abstand zueinander angeordnet sein, woraus die erfindungswesentlich hohe Schüttdichte resultieren kann. Als Resultat dieser hohen Schüttdichte können die Füllstoff-Partikel auch in einer auf eine Oberfläche aufgetragenen Farbzusammensetzung geringer beabstandet sein und für eine vorteilhaft höhere Abriebbeständigkeit und Mattierung des Füllstoffs bzw. der Farbzusammensetzung sorgen.

Als bevorzugt hat sich erwiesen, wenn die Partikel des Kalzinats eine mittlere Teilchengröße (dso, SediGraph III) aufweisen, die im Bereich zwischen 5 µm und 60 µm, bevorzugt im Bereich zwischen 7 µm und 50 µm, insbesondere bevorzugt im Bereich zwischen 8 µm und 40 µm liegt. Bei dieser Angabe handelt es sich um die mittlere Teilchengröße. Diese kann sich jedoch wie oben beschrieben aus Mischungen von Partikeln unterschiedlicher mittlerer Teilchengrößen zusammensetzen. Beispielsweise könnten Partikel eines Bandes größerer mittlerer Teilchengröße mit Partikeln eines Bandes geringerer mittlerer Teilchengröße in einem vorgegebenen Verhältnis gemischt werden. Beispielsweise setzen sich die Partikel aus ersten Partikeln aus einem Band größerer mittlerer Teilchengröße (15 µm < d₅₀ < 100 µm, bevorzugt 20 µm < d₅₀ < 60 µm, besonders bevorzugt 25 µm < d₅₀ < 40 µm) und zweiten Partikeln aus einem Band geringerer mittlerer Teilchengröße (30 µm > d₅₀ > 2 µm, bevorzugt 20 µm > d₅₀ > 3 µm, besonders bevorzugt 17 µm > d₅₀ > 5 µm, insbesondere bevorzugt 15 µm > d₅₀ > 7 µm) zusammen.

Erfindungsgemäß weist der Füllstoff eine Schüttdichte > 600 g/ L und bevorzugt im Bereich von 620 - 680 g/ L auf. Es hat sich gezeigt, dass eine hohe Schüttdichte aufgrund der dichten Packung der Füllstoff-Partikel besonders vorteilhaft ist und eine verbesserte Abriebbeständigkeit erzielt werden kann.

Die gemessenen Schüttdichten in g/ L des erfindungsgemäßen Füllstoffs und der Vergleichsprodukte H, V, C, M sowie feiner Kalzinate im Allgemeinen sind in Tabelle 1 gezeigt.

**Tabelle 1**

| | **Schüttdichte [g/ L]** |
|---|---|
| erfindungsgemäßer Füllstoff | > 600 |
| Vergleichsprodukt H | ∼ 350 |
| Vergleichsprodukt V | ≤ 450 |
| Vergleichsprodukt C | ∼ 260 |
| Vergleichsprodukt M | ≤ 450 |
| feine Kalzinate | < 300 |

Anhand der in Tabelle 1 dargestellten Messergebnisse ist ersichtlich, dass der erfindungsgemäße Füllstoff eine wesentlich höhere Schüttdichte als ähnliche Vergleichsprodukte auf dem Markt aufweist.

Bevorzugt ist, dass der Füllstoff eine Ölzahl nach DIN EN ISO 787-5:1995-10 < 50 g/ 100 g, bevorzugt < 40 g/ 100 g und besonders bevorzugt < 30 g/ 100g aufweist. Bei der Bestimmung der Ölzahl nach DIN EN ISO 787-5:1995-10 handelt es sich um ein allgemeines Prüfverfahren für Pigmente und Füllstoffe. Die Ölzahl gibt dabei an welche Menge Öl für eine definierte Menge eines Füllstoffs, in Form eines Pulvers, nötig ist, um eine nichtbrechende Paste zu erhalten. Die Angabe der Ölzahl erfolgt üblicherweise in g benötigtes Öl/ 100 g Füllstoff. Als Öl wird üblicherweise Leinöl verwendet. Aus einer niedrigen Ölzahl kann meist abgeleitet werden, dass der Füllstoff eine gute Dispergierbarkeit in einem Bindemittel aufweist und somit größere Füllstoffmengen bei geringerem Bindemittelbedarf in Farbzusammensetzungen verwendet werden können. Durch einen geringeren Bedarf an teurem Bindemittel kann der Preis für eine Farbzusammensetzung durch den Füllstoff gesenkt werden. Eine Variable, durch deren Einstellung eine niedrige Ölzahl erreicht werden kann ist die Verbesserung der Benetzbarkeit der Füllstoff-Partikel durch das Öl. Dies kann beispielsweise durch günstige Oberflächenmaterialien, vorteilhafte Oberflächengeometrien und/oder günstige Oberfläche-zu-Volumenverhältnisse beeinflusst werden. Im vorliegenden Fall ist bevorzugt, dass die Oberflächengeometrien und/oder günstige Oberfläche-zu-Volumenverhältnisse so gewählt sind, dass die wie oben definiert geringe Ölzahl erreicht werden kann. Ein besonders vorteilhafter Effekt auf die Ölzahl kann durch ebene Oberflächenanteile erreicht werden, entlang derer benachbarte Partikel auf einem äußerst dünnen Ölfilm aneinander entlang gleiten können. Im Vergleich zu unebenen Oberflächen ist der Ölbedarf zum Auffüllen von Oberflächenvertiefungen, um ein vergleichbares Gleiten zu ermöglichen, reduziert.

Gemäß einer vorteilhaften Ausführungsform weisen mindestens 50 %, bevorzugt mindestens 75 %, weiter bevorzugt mindestens 80 % und besonders bevorzugt mindestens 90 % der Partikel des Kalzinats eine kantige Morphologie und/oder mindestens eine ebene Oberfläche auf, deren Anteil an der zugeordneten Seitenfläche des jeweiligen Partikels mindestens 25%, bevorzugt mindestens 30%, weiter bevorzugt mindestens 40% insbesondere bevorzugt mindestens 50% beträgt. Durch diese Morphologie der Partikel des Kalzinats kann auf besonders einfache und bevorzugte Weise gewährleistet werden, dass die Partikel aufgrund der Kanten und der ebenen Flächen dicht gepackt werden können und somit auch die oben beschriebene hohe Schüttdichte erreichen und/oder die ebenen Oberflächen besser aneinander vorbeigleiten können, sodass eine geringe Menge an Bindemittel nötig ist um eine gute Fließfähigkeit zu gewährleisten.

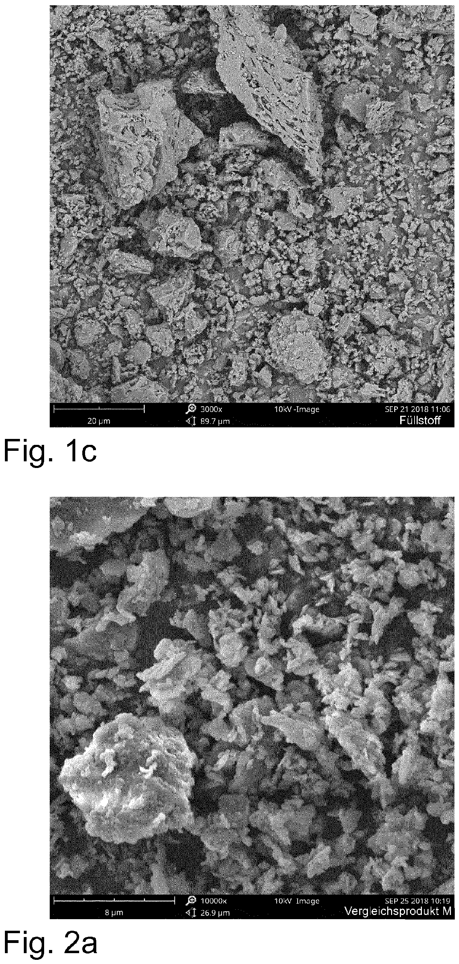

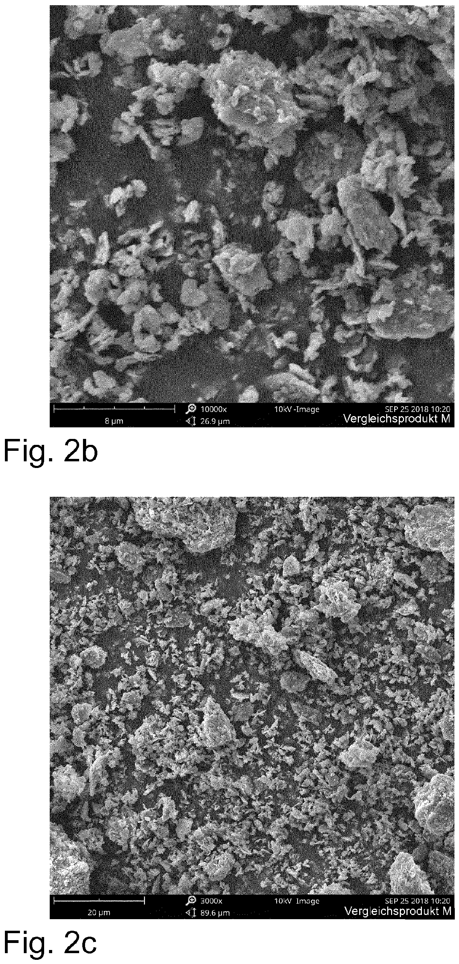

Im Gegensatz zu aus dem Stand der Technik bekannten, im Wirbelschichtverfahren hergestellten Füllstoffen gemäß EP 2 744 863 B1, die ebenfalls ein Kalzinat mit einem hohen Mullitgehalt umfassen und - jedoch wie in Fig. 2a - c gezeigt - größtenteils Partikel mit abgerundeten Ecken und Kanten sowie unebenen Oberflächen aufweisen, zeigen die Kalzinat-Partikel gemäß einer bevorzugten Ausführungsform der vorliegenden Erfindung eine deutlich kantigere Morphologie und weit mehr ebene Oberflächen. Dies gewährleistet eine höhere Schüttdichte des Füllstoffs aufgrund der besseren Packbarkeit der Partikel sowie einen geringeren Bindemittelbedarf bei deren Verwendung in einer Farbzusammensetzung, da die Partikel mit ebenen Oberflächen besser aneinander gleiten und weniger Bindemittel in Unebenheiten, Mulden und/oder Löchern in der Oberfläche absorbiert wird. Somit ist bei derartigen Partikeln ebenfalls eine sehr gute Benetzbarkeit mit dem Bindemittel ermöglicht, da dieses bereits bei geringen eingesetzten Volumina auf den ebenen Flächen fließen und bevorzugt die Partikel vollständig umschließen kann.

Des Weiteren ist die Erfindung auf eine Farbzusammensetzung gerichtet, die einen Füllstoff umfasst, welcher eine Schüttdichte > 600 g/ L aufweist und ein Kalzinat umfasst welches Partikel mit einer mittleren Teilchengröße (dso, SediGraph III) im Bereich zwischen 3 µm und 50 µm und einem Mullitgehalt von 30 - 70 gemessen als Mullitindex aufweist.

Bei der Farbzusammensetzung handelt es sich vorzugsweise um eine Dispersionsfarbe, welche zur Verwendung auf Innen- und/oder Außenwänden (z. B. Fassadenwänden) vorgesehen ist. Der hohe Mullitgehalt der Kalzinat-Partikel trägt dazu bei, dass diese eine hohe Härte nach Mohs aufweisen, was wiederum einen positiven Einfluss auf die hohe Abriebbeständigkeit und/oder Reinigungsfähigkeit der Farbzusammensetzung hat.

Aus dem Stand der Technik (z. B. EP 2 744 863 B1) sind Farbzusammensetzungen bekannt, die Füllstoffe aus Kalzinat-Partikeln mit einem hohen Mullitgehalt beinhalten. Entgegen diesem Stand der Technik konnte im Rahmen dieser Erfindung jedoch gezeigt werden, dass die erhöhte Scheuerbeständigkeit nicht auf die bisher als wesentlich angenommene geringe Teilchengröße im Bereich von 2 - 7 µm der Partikel beschränkt ist. Vielmehr konnte durch den erfindungsgemäßen Füllstoff gezeigt werden, dass durch Partikel, die einen weit größeren Bereich für die Teilchengröße abdecken, ein zumindest ähnlicher Effekt erreicht werden kann. Je nach Morphologie der Partikel kann, der aus dem Stand der Technik bekannte Effekt sogar noch übertroffen werden. Dies tritt beispielsweise in einer Farbzusammensetzung nach deren Auftrag auf eine Oberfläche bei eng aneinander oder übereinanderliegenden Partikeln auf, wobei bevorzugt zumindest eine Fraktion der Partikel eine eng packbare, beispielsweise eine im Wesentlichen plättchenförmige Geometrie, aufweist.

Werden Partikel verschiedener Teilchengröße eingesetzt, kann dies für die erfindungsgemäß hohe Schüttdichte des Füllstoffes weiter vorteilhaft sein, da kleinere Partikel Hohlräume zwischen größeren Partikeln einnehmen können und ein Volumen effektiver ausgefüllt werden kann. In der Farbzusammensetzung können sich die Partikel somit näherkommen und eine mit Farbzusammensetzung behandelte Oberfläche ist bei beispielsweise gleichem Auftragsvolumen der Farbzusammensetzung dichter mit den darin enthaltenen Füllstoffpartikeln bedeckt. Dadurch können Farbzusammensetzungen mit einer höheren Abriebbeständigkeit, einer besseren Reinigungsfähigkeit und/oder gewünschten Mattierung realisiert werden.

In einer weiteren bevorzugten Ausführungsform umfasst die Farbzusammensetzung einen Füllstoff nach einem der Ansprüche 1 bis 4.

Bevorzugt ist eine wie oben definierte Farbzusammensetzung nach DIN EN 13300:2002-11 hinsichtlich der Scheuerbeständigkeit mindestens der Klasse 3 oder besser, bevorzugt der Klasse 2 oder besser zugeordnet. Gemäß der DIN EN 13300:2002-11 erfolgt eine Einteilung der Farbzusammensetzung hinsichtlich der Nassabriebbeständigkeit in Klassen, wobei die Klassen bezogen auf den Abrieb in µm bei einer definierten Anzahl an Scheuerzyklen bzw. Hüben gebildet sind. Klasse 1 bezeichnet die höchste Widerstandsfähigkeit mit einem Abrieb < 5 µm bei 200 Scheuerzyklen. Die Klassen 2 und 3 zeigen einen Abrieb ≥ 5 µm und < 20 µm beziehungsweise ≥ 20 µm und < 70 µm bei 200 Scheuerzyklen.

Besonders bevorzugt umfasst die Farbzusammensetzung mindestens eine weitere Substanz, die ausgewählt ist aus einer Gruppe, die Lösungsmittel, Bindemittel, Pigmente und Additive umfasst. Bei dem enthaltenen Lösungsmittel kann es sich um Wasser und/oder ein organisches Lösungsmittel handeln. Unabhängig von den übrigen Bestandteilen können die Bindemittel in der Farbzusammensetzung dabei Alkydharze, Epoxidharze, Polyurethane, Silikonharze, Phenolharze, Epoxidester, Polyesterharze, Polyamidharze, Vinylesterharze, Polyacrylate, Gummi Arabicum und/oder Kasein umfassen, sind aber nicht darauf beschränkt. Unabhängig von den übrigen Bestandteilen können die Pigmente ein oder mehrere anorganische und/oder organische Pigmente umfassen, wobei es sich um weiße, schwarze und/oder farbige Pigmente handeln kann.

Das oben erwähnte mindestens eine Additiv ist bevorzugt ausgewählt aus einer Gruppe, die Verdickungsmittel, Netzmittel, Dispergiermittel, Stabilisatoren, Konservierungsmittel, Entschäumer, Biozide, Marmormehl und Kreide umfasst. Durch eine geeignete Auswahl eines oder mehrerer dieser Additive kann beispielsweise die Fließfähigkeit, Lagerbeständigkeit, das rheologische Verhalten, Haptik, Reflexionsvermögen, Benetzbarkeit verschiedener Untergründe, Gefahr von Algenbewuchs der mit der Farbzusammensetzung beschichteten Oberfläche und andere Eigenschaften der Farbzusammensetzung in vorteilhafter Weise eingestellt werden.

Eine Variante der Farbzusammensetzung zeichnet sich dadurch aus, dass sie eine Pigment-Volumen-Konzentration (PVK) im Bereich zwischen 40 und 90, bevorzugt im Bereich zwischen 50 und 80 aufweist. Die Pigment-Volumen-Konzentration (PVK) gibt dabei das Volumenverhältnis zwischen Pigmenten und/oder Füllstoffen und dem Bindemittel in der ausgehärteten Farbzusammensetzung an, d.h. je höher der PVK-Wert desto geringer der vorhandene Bindemittelanteil. Der Anteil bzw. das Volumen an Bindemittel in der Farbzusammensetzung kann im Verhältnis zum Füllstoff aufgrund der oben dargestellten Merkmale der Füllstoff-Partikel sehr gering gewählt werden.

Bevorzugt ist, dass die Farbzusammensetzung eine Nassabriebbeständigkeit nach DIN EN ISO 11998:2006-10 < 45 µm Abrieb/ 200 Scheuerzyklen, bevorzugt < 30 µm Abrieb/ 200 Scheuerzyklen, besonders bevorzugt < 20 µm Abrieb/ 200 Scheuerzyklen und insbesondere bevorzugt 10 - 15µm, beispielsweise etwa 12±1 µm Abrieb/ 200 Scheuerzyklen aufweist. Der geringe Abrieb der Farbzusammensetzung gewährleistet eine hohe Widerstandsfähigkeit der Beschichtung auf einer Oberfläche, weswegen eine erneute Auftragung der Farbzusammensetzung hinausgezögert werden kann und die Kosten somit gesenkt werden.

Weiterhin bevorzugt ist, dass die Farbzusammensetzung eine Abriebbeständigkeit nach ASTM D2486-17 > 1000 Zyklen, bevorzugt > 2000 Zyklen, weiter bevorzugt > 3000 Zyklen, besonders bevorzugt 3500 - 4500 Zyklen und insbesondere bevorzugt 3800 - 4200 Zyklen aufweist. Die Zahl der Zyklen gibt an, wie viele Zyklen nötig sind, bis erste Durchriebstellen auf einer Testfläche erkennbar sind. Die hohe Abriebbeständigkeit der Farbzusammensetzung bietet wie bereits erwähnt den Vorteil, dass diese selten erneuert werden muss und die darunterliegende Oberfläche vor mechanischer Belastung geschützt wird.

Als besonders bevorzugt hat sich gezeigt, wenn die Farbzusammensetzung eine Reinigungsfähigkeit nach ASTM D4828-94(2016) von über 100 Punkten, bevorzugt von über 103 Punkten, weiter bevorzugt von über 108 Punkten und besonders bevorzugt von mindestens 109 Punkten aufweist. Die gute Reinigungsfähigkeit ermöglicht ein größtenteils rückstandsloses Entfernen von Verunreinigungen ohne großen Aufwand. Dies ist vor allem für Fassadenwände aufgrund von böswilliger Beschmutzung, beispielsweise durch Graffiti, ein entscheidender Vorteil, da der Fassadenanstrich einfach gereinigt werden kann und nicht erneuert werden muss.

Ein weiterer wesentlicher Aspekt der Erfindung ist die Verwendung des erfindungsgemäßen Füllstoffs zur Herstellung einer Farbzusammensetzung.

Eine Variante der Verwendung zeichnet sich dadurch aus, dass die Farbzusammensetzung nach DIN EN 13300:2002-11 hinsichtlich der Scheuerbeständigkeit mindestens der Klasse 3 oder besser, bevorzugt der Klasse 2 oder besser zugeordnet ist.

In Tabelle 2 ist eine Beispielrezeptur für eine Farbzusammensetzung, umfassend den erfindungsgemäßen Füllstoff gezeigt.

**Tabelle 2**

| **Premium Innenwandfarbe mit PVK 50** | |
|---|---|
| | Ma-% |
| Wasser | 25,2 |
| Verdicker | 2,7 |
| Netzmittel | 1,0 |
| Entschäumer | 0,2 |
| TiO₂ | 19,0 |
| Füllstoff | 21,5 |
| Entschäumer | 0,2 |
| Acrylat-Dispersion | 30,0 |
| Biozid | 0,2 |

In Tabelle 3 ist eine weitere Beispielrezeptur für eine Farbzusammensetzung, umfassend den erfindungsgemäßen Füllstoff gezeigt.

**Tabelle 3**

| **Innenwandfarbe mittlere Qualität mit PVK 80** | |
|---|---|
| | Ma-% |
| Wasser | 29,9 |
| Verdicker | 0,5 |
| Netzmittel | 10,4 |
| Entschäumer | 0,2 |
| TiO₂ | 6,0 |
| Marmormehl | 38,0 |
| Füllstoff | 16,5 |
| Biozid | 0,3 |
| Entschäumer | 0,2 |
| Druckpolymer | 8,0 |

Ein Vergleich der Messergebnisse der Nassabriebbeständigkeit, der Reinigungsfähigkeit und der mittleren Teilchengröße für die beispielhaften Ausführungsformen einer Farbzusammensetzungen gemäß der vorliegenden Erfindung ("Farbzusammensetzung E") aus Tabelle 2 oder 3 sowie von Farbzusammensetzungen auf dem Markt, welche die Vergleichsfüllstoffe H ("Farbzusammensetzung H") oder M ("Farbzusammensetzung M") enthalten, ist in Tabelle 4 dargestellt.

**Tabelle 4**

| | Farbzusammensetzung H | Farbzusammensetzung M | Farbzusammensetzung E | PVK |
|---|---|---|---|---|
| Nassabriebbeständig keit (DIN EN ISO 11998:2006-10) | 42 µm Abrieb | 45 µm Abrieb | 12 µm Abrieb | 80 |
| Nassabriebbeständigkeit (ASTM D2486-17) | ca. 1000 Zyklen | ca. 1000 Zyklen | ca. 4000 Zyklen | 50 |
| Reinigungsfähigkeit (ASTM D4828-94-(2016)) | 100 | nicht bekannt | 109 | 50 |
| d₅₀ (SediGraph III) | ca. 5 µm | ca. 4 µm | ca. 5µm | |

Wie aus Tabelle 4 ersichtlich ist, bietet die erfindungsgemäße Farbzusammensetzung eine deutlich erhöhte Nassabriebbeständigkeit im Vergleich zu den getesteten Produkten auf dem Markt. Der beschriebene Füllstoff gewährleistet aufgrund der oben beschriebenen Merkmale eine stark verbesserte Widerstandfähigkeit und eine bessere Reinigungsfähigkeit als die aus dem Stand der Technik bekannten Füllstoffe.

Weitere Vorteile und Ausführungsformen der Erfindung werden anhand der folgenden Figuren und Beispiele erläutert.

In den Figuren zeigen:
- Fig. 1a-c: Rasterelektronenmikroskop-Aufnahmen von oben beschriebenen Füllstoff-Partikeln;
- Fig. 2a-c: Rasterelektronenmikroskop-Aufnahmen von Füllstoff-Partikeln eines Vergleichsprodukts auf dem Markt.

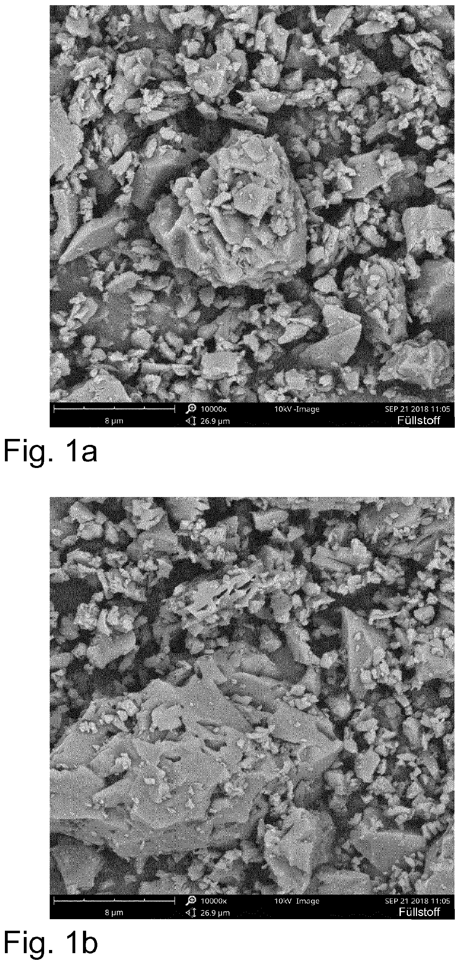

Die Figuren 1a - c zeigen jeweils Rasterelektronenmikroskop(REM)-Aufnahmen von Füllstoff-Partikeln gemäß eines vorteilhaften Ausführungsbeispiels dieser Erfindung. Dabei zeigen die Fig. 1a und die Fig. 1b unterschiedliche Ausschnitte der Oberfläche, auf der die Partikel aufgebracht sind in 10000-facher Vergrößerung. Fig. 1c hingegen zeigt einen Ausschnitt der Oberfläche, der in 3000-facher Vergrößerung dargestellt ist.

Wie auf den REM-Aufnahmen in den Fig. 1a - c zu sehen ist, weisen die Partikel des Füllstoffs im Wesentlichen eine kantige Morphologie auf, wobei kaum abgerundete Ecken oder Kanten ausgebildet sind. Außerdem weisen die Partikel einen hohen Anteil ebener Oberflächen auf, die jeweils einen Großteil der jeweiligen Seitenflächen des Partikels ausmachen. Es ist ebenfalls erkennbar, dass sich die Teilchengröße der Partikel deutlich unterscheidet und aus dem weiten Bereich der mittleren Teilchengröße resultiert. Dies könnte dazu beitragen, dass der Füllstoff eine hohe Schüttdichte aufweist, da sich die unterschiedlich großen kantigen Partikel mit den vielen ebenen Flächen sehr dicht packen lassen könnten und das zur Verfügung stehende Volumen effektiv ausnutzen könnten. Außerdem gewährleistet die beschriebene Morphologie des gezeigten Füllstoffs eine gute Benetzbarkeit mit einem Bindemittel, wobei dies durch die niedrige Ölzahl der Partikel wiedergegeben wird. Im Zusammenhang mit den Figuren 1a - c ist darauf hingewiesen, dass zur Veranschaulichung der Partikel jeweils eine lose Lage für die REM-Aufnahmen herangezogen wurde und die Anordnung der Partikel zueinander von der Anordnung in der dichtest möglichen Packung abweichen kann.

Als Vergleich zu der in den Figuren 1a - c dargestellten Ausführungsform gemäß der vorliegenden Erfindung sind in den Fig. 2a - c REM-Aufnehmen eines sich auf dem Markt befindlichen Füllstoffs (Vergleichsprodukt M) gezeigt. Bei diesem Produkt handelt es sich ebenfalls um Kalzinat-Partikel, die einen hohen Mullitgehalt umfassen. Es ist zu erkennen, dass die Füllstoff-Partikel im Wesentlichen abgerundete Ecken und Kanten aufweisen und über so gut wie keine ebenen Oberflächen verfügen. Die erkennbaren Flächen zeigen im Wesentlichen eine hohe Unebenheit. Weiterhin weisen die Partikel eine kleine mittlere Teilchengröße auf und auch das Partikelgrößenband, in dem sich die Teilchengrößen befinden, ist schmaler, weshalb die Partikel im Wesentlichen alle sehr ähnliche Teilchengrößen zeigen.

Die im Wesentlichen tropfen- oder reiskornartige Form der Partikel des in den Figuren 2a - c gezeigten Vergleichsprodukts lässt darauf schließen, dass die Kalzinierung im Wirbelschichtverfahren erfolgt ist. Größere Partikel scheinen Agglomerate kleinerer tropfen- oder reiskornförmiger Partikel zu sein.

Im gezeigten Ausführungsbeispiel kann die in der Schüttung des Füllstoffs als auch in der Farbzusammensetzung erreichbare hohe Schüttdichte bzw. der hohe Füllstoffanteil insbesondere mit der im Vergleich zu dem im Handel erhältlichen Füllstoff-Partikel (siehe Fig. 2a - c) anderen Morphologie und der breiteren Partikelgrößenverteilung begründet werden. In Kombination mit dem hohen Mullitgehalt lassen sich mit Füllstoffen gemäß der vorliegenden Erfindung die oben beschriebenen vorteilhaften Eigenschaften gegenüber dem Stand der Technik erreichen.

## Patentansprüche

1. Füllstoff für eine Farbzusammensetzung, wobei der Füllstoff ein Kalzinat umfasst, welches Partikel mit einer mittleren Teilchengröße (dso, SediGraph III) im Bereich zwischen 3 µm und 50 µm und einem Mullitgehalt von 30 - 70 gemessen als Mullitindex aufweist, **dadurch gekennzeichnet, dass** der Füllstoff eine Schüttdichte > 600 g/ L aufweist.

2. Füllstoff nach Anspruch 1, **dadurch gekennzeichnet, dass** die Partikel des Kalzinats eine mittlere Teilchengröße (dso, SediGraph III) aufweisen, die im Bereich zwischen 7 µm und 50 µm, bevorzugt im Bereich zwischen 8 µm und 40 µm liegt.

3. Füllstoff nach Anspruch 1 und 2, **dadurch gekennzeichnet, dass** der Füllstoff eine Schüttdichte im Bereich von 620 - 680 g/ L aufweist.

4. Füllstoff nach einem der Ansprüche 1 bis 3, **dadurch gekennzeichnet, dass** der Füllstoff eine Ölzahl nach DIN EN ISO 787-5:1995-10 < 50 g/ 100 g, bevorzugt < 40 g/ 100 g und besonders bevorzugt < 30 g/ 100g aufweist.

5. Farbzusammensetzung, **dadurch gekennzeichnet, dass** sie einen Füllstoff umfasst, welcher eine Schüttdichte > 600 g/ L aufweist und ein Kalzinat umfasst welches Partikel mit einer mittleren Teilchengröße (dso, SediGraph III) im Bereich zwischen 3 µm und 50 µm und einem Mullitgehalt von 30 - 70 gemessen als Mullitindex aufweist.

6. Farbzusammensetzung nach Anspruch 5, **dadurch gekennzeichnet, dass** sie nach DIN EN 13300:2002-11 hinsichtlich der Scheuerbeständigkeit mindestens der Klasse 3 oder besser, bevorzugt der Klasse 2 oder besser zugeordnet ist.

7. Farbzusammensetzung nach Anspruch 5 oder 6, **dadurch gekennzeichnet, dass** sie mindestens eine weitere Substanz umfasst, die ausgewählt ist aus einer Gruppe, die Lösungsmittel, Bindemittel, Pigmente und Additive umfasst.

8. Farbzusammensetzung nach Anspruch 7, **dadurch gekennzeichnet, dass** das mindestens eine Additiv ausgewählt ist aus einer Gruppe, die Verdickungsmittel, Netzmittel, Dispergiermittel, Stabilisatoren, Konservierungsmittel, Entschäumer, Biozide, Marmormehl und Kreide umfasst.

9. Farbzusammensetzung nach einem der Ansprüche 5 bis 8, **dadurch gekennzeichnet, dass** die Farbzusammensetzung eine Pigment-Volumen-Konzentration (PVK) im Bereich zwischen 40 und 90, bevorzugt im Bereich zwischen 50 und 80 aufweist.

10. Farbzusammensetzung nach einem der Ansprüche 5 bis 9, **dadurch gekennzeichnet, dass** die Farbzusammensetzung eine Nassabriebbeständigkeit nach DIN EN ISO 11998:2006-10 < 45 µm Abrieb/ 200 Scheuerzyklen, bevorzugt < 30 µm Abrieb/ 200 Scheuerzyklen, besonders bevorzugt < 20 µm Abrieb/ 200 Scheuerzyklen und insbesondere bevorzugt 10 - 15µm, beispielsweise etwa 12±1 µm Abrieb/ 200 Scheuerzyklen aufweist.

11. Farbzusammensetzung nach einem der Ansprüche 5 bis 10, **dadurch gekennzeichnet, dass** die Farbzusammensetzung eine Abriebbeständigkeit nach ASTM D2486-17 > 1000 Zyklen, bevorzugt > 2000 Zyklen, weiter bevorzugt > 3000 Zyklen, besonders bevorzugt 3500 - 4500 Zyklen und insbesondere bevorzugt 3800 - 4200 Zyklen aufweist.

12. Farbzusammensetzung nach einem der Ansprüche 5 bis 11, **dadurch gekennzeichnet, dass** die Farbzusammensetzung eine Reinigungsfähigkeit nach ASTM D4828-94-(2016) von über 100 Punkten, bevorzugt von über 103 Punkten, weiter bevorzugt von über 108 Punkten und besonders bevorzugt von mindestens 109 Punkten aufweist.

13. Verwendung eines Füllstoffs nach einem der Ansprüche 1 - 5 zur Herstellung einer Farbzusammensetzung.

14. Verwendung nach Anspruch 13, **dadurch gekennzeichnet, dass** die Farbzusammensetzung nach DIN EN 13300:2002-11 hinsichtlich der Scheuerbeständigkeit mindestens der Klasse 3 oder besser, bevorzugt der Klasse 2 oder besser zugeordnet ist.

## Claims

1. Filler for a colour composition, wherein the filler comprises a calcinate having particles with an average particle size (d₅₀, SediGraph III) in the range between 3 µm and 50 µm and a mullite content of 30-70 measured as a mullite index, **characterised in that** the filler has a bulk density of > 600 g/ L.

2. Filler according to claim 1, **characterised in that** the particles of the calcinate have an average particle size (d₅₀, SediGraph III) in the range between 7 µm and 50 µm, preferably in the range between 8 µm and 40 µm.

3. The filler according to claim 1 and 2, **characterised in that** the filler has a bulk density in the range from 620 to 680 g/ L.

4. The filler according to any of claims 1 to 3, **characterised in that** the filler has an oil absorption according to DIN EN ISO 787-5:1995-10 of < 50 g/ 100 g, preferably of < 40 g/ 100 g, and particularly preferably of <30 g/ 100g.

5. Colour composition, **characterised in that** it comprises a filler having a bulk density of > 600 g/ L and comprises a calcinate which has particles of an average particle size (d₅₀, SediGraph III) in the range between 3 µm and 50 µm and a mullite content of 30-70 measured as a mullite index.

6. Colour composition according to claim 5, **characterised in that** it is assigned to at least class 3 or better, preferably class 2 or better, according to DIN EN 13300:2002-11 in terms of abrasion resistance.

7. Colour composition according to claim 5 or 6, **characterised in that** it comprises at least one further substance selected from a group comprising solvents, binders, pigments and additives.

8. Colour composition according to claim 7, **characterised in that** the at least one additive is selected from a group comprising thickening agents, wetting agents, dispersants, stabilizers, preservatives, defoamers, biocides, marble flour and chalk.

9. Colour composition according to any of claims 5 to 8, **characterised in that** the colour composition has a pigment volume concentration (PVK) in the range between 40 and 90, preferably in the range between 50 and 80.

10. Colour composition according to any of claims 5 to 9, **characterised in that** the colour composition has a wet abrasion resistance according to DIN EN ISO 11998:2006-10 of < 45 µm abrasion/ 200 abrasion cycles, preferably of < 30 µm abrasion/ 200 abrasion cycles, more preferably of < 20 µm abrasion/ 200 abrasion cycles and more preferably of 10-15 µm, for example about 12 ± 1 µm abrasion/ 200 abrasion cycles.

11. Colour composition according to any of claims 5 to 10, **characterised in that** the colour composition has an abrasion resistance according to ASTM D2486-17 of > 1000 cycles, preferably of > 2000 cycles, more preferably of > 3000 cycles, more preferably of 3500-4500 cycles and most preferably of 3800 - 4200 cycles.

12. Colour composition according to any of claims 5 to 11, **characterised in that** the colour composition has a cleaning ability according to ASTM D4828-94- (2016) of over 100 points, preferably of more than 103 points, more preferably of more than 108 points, and particularly preferably of at least 109 points.

13. A use of a filler according to any of claims 1 to 5 for the preparation of a colour composition.

14. The use according to claim 13, **characterised in that** the colour composition is assigned, according to DIN EN 13300:2002-11 with regard to the abrasion resistance, to at least class 3 or better, preferably to class 2 or better.

## Revendications

1. Charge pour une composition de peinture, la charge comportant un produit de calcination, lequel présente des particules ayant une taille moyenne des particules (d₅₀, SediGraph III) dans la plage entre 3 µm et 50 µm et une teneur en mullite de 30 - 70 mesurée en tant qu'indice de mullite, **caractérisée par le fait que** la charge présente une masse volumique apparente > 600 g/L.

2. Charge selon la revendication 1, **caractérisée par le fait que** les particules du produit de calcination présentent une taille moyenne des particules (dso, SediGraph III) qui se situe dans la plage 7 µm et 50 µm, de préférence dans la plage entre 8 µm et 40 µm.

3. Charge selon l'une des revendications 1 ou 2, **caractérisée par le fait que** la charge présente une masse volumique apparente dans la plage de 620 - 680 g/L.

4. Charge selon l'une des revendications 1 à 3, **caractérisée par le fait que** la charge présente une absorption d'huile selon DIN EN ISO 787-5:1995-10 < 50 g/ 100 g, de préférence < 40 g/ 100 g et de manière particulièrement préférée < 30 g/ 100g.

5. Composition de peinture, **caractérisée par le fait qu'**elle comporte une charge, laquelle présente une masse volumique apparente > 600 g/L et comporte un produit de calcination lequel présente des particules ayant une taille moyenne des particules (d₅₀, SediGraph III) dans la plage entre 3 µm et 50 µm et une teneur en mullite de 30 - 70 mesurée en tant qu'indice de mullite.

6. Composition de peinture selon la revendication 5, **caractérisée par le fait qu'**elle est affectée au moins à la classe 3 ou mieux, de préférence à la classe 2 ou mieux, en ce qui concerne la résistance à l'abrasion selon DIN EN 13300:2002-11.

7. Composition de peinture selon l'une des revendications 5 ou 6, **caractérisée par le fait qu'**elle comporte au moins une autre substance qui est choisie dans un groupe qui comporte les solvants, les liants, les pigments et les additifs.

8. Composition de peinture selon la revendication 7, **caractérisée par le fait que** ledit au moins un additif est choisi dans un groupe qui comporte les épaississants, les agents mouillants, les dispersants, les stabilisants, les conservateurs, les agents anti-mousse, les biocides, la poudre de marbre et la craie.

9. Composition de peinture selon l'une des revendications 5 à 8, **caractérisée par le fait que** la composition de peinture présente une concentration pigmentaire volumique (CPV) dans la plage entre 40 et 90, de préférence dans la plage entre 50 et 80.

10. Composition de peinture selon l'une des revendications 5 à 9, **caractérisée par le fait que** la composition de peinture présente une résistance à l'abrasion humide selon DIN EN ISO 11998:2006-10 < 45 µm d'abrasion/200 cycles d'abrasion, de préférence < 30 µm d'abrasion/200 cycles d'abrasion, de manière particulièrement préférée < 20 µm d'abrasion/ 200 cycles d'abrasion et de manière particulièrement préférée 10 - 15 µm, par exemple environ 12±1 µm d'abrasion/ 200 cycles d'abrasion.

11. Composition de peinture selon l'une des revendications 5 à 10, **caractérisée par le fait que** la composition de peinture présente une résistance à l'abrasion selon ASTM D2486-17 > 1000 cycles, de préférence > 2000 cycles, de façon davantage préférée > 3000 cycles, de façon particulièrement préférée de 3500 - 4500 cycles et de façon tout particulièrement préférée de 3800 - 4200 cycles.

12. Composition de peinture selon l'une des revendications 5 à 11, **caractérisée par le fait que** la composition de peinture présente une aptitude au nettoyage selon ASTM D4828-94-(2016) de plus de 100 points, de préférence de plus de 103 points, de façon davantage préférée de plus de 108 points et de façon tout particulièrement préférée d'au moins 109 points.

13. Utilisation d'une charge selon l'une des revendications 1 à 5 pour la fabrication d'une composition de peinture.

14. Utilisation selon la revendication 13, **caractérisée par le fait que** la composition de peinture est affectée au moins à la classe 3 ou mieux, de préférence à la classe 2 ou mieux, en ce qui concerne la résistance à l'abrasion selon DIN EN 13300:2002-11.
